# EUROPÄISCHE PATENTANMELDUNG

(11) **EP 3 530 400 A1**
(43) Veröffentlichungstag der Anmeldung: **28.08.2019**
(21) Anmeldenummer: 19155346.0
(22) Anmeldetag: 04.02.2019
(51) Int. Cl.: B23P 15/10, B23K 9/04, B22F 5/00, B23K 10/02, B23K 15/00, F02F 3/00, B33Y 10/00, B23K 26/342

(54) **VERFAHREN ZUM HERSTELLEN EINES BAUTEILS, INSBESONDERE FAHRZEUGBAUTEILS, UND ENTSPRECHEND HERGESTELLTES BAUTEIL**

(30) Priorität: 23.02.2018 DE 102018104103
(71) Anmelder: MAN Truck & Bus SE, 80995 München (DE)
(72) Erfinder: Korn, Matthias, 91052 Erlangen (DE); Scharf, Peter, 90449 Nürnberg (DE)
(74) Vertreter: v. Bezold & Partner Patentanwälte - PartG mbB

(57) **Zusammenfassung**

Die Erfindung betrifft ein Verfahren zum Herstellen eines Bauteils, insbesondere eines Fahrzeugbauteils und/oder eines Motorbauteils, vorzugsweise eines Kolbens (10) einer Brennkraftmaschine. Das Verfahren weist ein Ausbilden eines ersten Körperbereichs (12), insbesondere mittels Gießen und/oder Schmieden, auf. Das Verfahren weist ein Ausbilden eines zweiten Körperbereichs (14), der mit dem ersten Körperbereich (12) verbunden ist, aus einer Aluminiumlegierung oder einer Eisenbasislegierung oder einer Kupferbasislegierung mittels eines additiven Fertigungsverfahrens auf. Der zweite Körperbereich (14) ist so legiert, dass er eine höhere thermische Stabilität, eine höhere mechanische Festigkeit und/oder eine höhere Verschleißbeständigkeit bei tribologischer Beanspruchung als der erste Körperbereich (12) aufweist.

## Beschreibung

Die Erfindung betrifft ein Verfahren zum Herstellen eines Bauteils, insbesondere eines Fahrzeugbauteils und/oder eines Motorbauteils, vorzugsweise eines Kolbens einer Brennkraftmaschine.

Aus der WO 2017/029186 A1 ist ein Stahl- oder Aluminiumkolben für einen Verbrennungsmotor bekannt. Der Kolben weist einen Kühlkanal auf, in dem sich Zapfen erstrecken und/oder der Wellen, Verdickungen und/oder Verjüngungen aufweist. Bei einem Verfahren zur Herstellung zumindest eines Teils eines solchen Stahl- oder Aluminiumkolbens für einen Verbrennungsmotor wird ein additives Fertigungsverfahren verwendet. Das additive Fertigungsverfahren wird verwendet, um bislang nicht oder kaum herstellbare Formen zu erzeugen.

Die US 9,765,727 B2 offenbart ein Verfahren zum Herstellen eines Kolbens. Das Verfahren umfasst das Gießen oder Schmieden des Kolbens als einteiliges Stück mit offener Kühlgalerie aus einem kostengünstigen ersten Material wie Stahl, Gusseisen oder Aluminium. Das Verfahren umfasst ferner die Bildung eines Teils der Oberfläche einer Brennkammer, bei der es sich um einen kleinen Bereich des Kolbens handelt, der direkt der Brennkammer ausgesetzt ist, aus einem zweiten Material durch additive Fertigung. Das zweite Material hat eine höhere Wärmeleitfähigkeit und eine höhere Beständigkeit gegen Oxidation, Erosion und Ölverkokung als das erste Material. Im Einzelnen wird offenbart, dass das zweite Material sich von dem ersten Material unterscheidet und aus den Materialien Edelstahl, einer Nickelbasislegierung und einer Nickel-Chrom-Basislegierung ausgewählt ist.

Die US 2014/0299091 A1 offenbart einen Kolbenkörper, der aus einem ersten Teile und einem zweiten Teil, das einen Kronenteil mit einer oberen Verbrennungsfläche und einer zumindest teilweise geschlossenen Ölgalerie enthält, besteht. Das erste Teil und das zweite Teil werden an einer Verbindungsstelle zusammengefügt, die sich auf einer Seite des Ölkanals gegenüber der oberen Verbrennungsfläche befindet. Das erste Teil wird durch Gießen oder Schmieden hergestellt. Das zweite Teil wird durch einen additiven Herstellungsprozess, wie z. B. direktes Metall-Lasersintern, hergestellt. Das zweite Teil besteht aus einem Material, das im Vergleich zum ersten Teil eine erhöhte Oxidationsbeständigkeit aufweist. Durch das Herstellungsverfahren können bestimmte geometrische Merkmale, wie Ölgalerien oder Verbrennungsmulden, hergestellt werden.

Im bekannten Stand der Technik wird ein additives Fertigungsverfahren somit zur Ausbildung komplexer Geometrien oder zum Vorsehen einer höhere Wärmeleitfähigkeit und einer höheren Beständigkeit gegen Oxidation, Erosion und Ölverkokung verwendet.

Der Erfindung liegt die Aufgabe zu Grunde, ein alternatives und/oder verbesserter Herstellungsverfahren für ein Bauteil, insbesondere ein Fahrzeugbauteil und/oder ein Motorbauteil, vorzugsweise einen Kolben einer Brennkraftmaschine, zu schaffen. Insbesondere soll mittels des Herstellungsverfahrens ein Bauteil herstellbar sein, das hohen thermischen und/oder tribologischen Belastungen standhält. Weiterhin kann dabei auf eine besonders gute (feste) Anbindung zum ersten Körperbereich und auf einen besonders wirtschaftlichen Legierungsaufbau und eine besonders wirtschaftliche Fertigungsweise geachtet werden.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Das Verfahren dient zum Herstellen eines Bauteils, insbesondere eines Fahrzeugbauteils und/oder eines Motorbauteils (z. B. Teil eines Kraftfahrzeugmotors, stationären Motors, Gasmotors, Dieselmotors, Benzinmotors, einer Turbine usw.), vorzugsweise eines Kolbens einer Brennkraftmaschine. Das Verfahren weist ein Ausbilden (z. B. Herstellen, Bilden usw.) eines ersten Körperbereichs, insbesondere mittels Gießen und/oder Schmieden, auf. Das Verfahren weist ein Ausbilden (z. B. Herstellen, Bilden usw.) eines zweiten Körperbereichs, der mit dem ersten Körperbereich (z. B. direkt oder indirekt) verbunden ist, aus einer Aluminiumlegierung oder einer Eisenbasislegierung (z. B. Stahl, Gusseisenlegierung) oder einer Kupferbasislegierung mittels eines additiven Fertigungsverfahrens auf. Der zweite Körperbereich ist so legiert, dass er eine höhere thermische Stabilität, eine höhere mechanische Festigkeit und/oder eine höhere Verschleißbeständigkeit bei tribologischer Beanspruchung als der erste Körperbereich aufweist.

Damit schafft das Verfahren ein Bauteil mittels eines Hybridherstellungsverfahrens, bei dem auf vorteilhafte Weise der zweite Körperbereich zum Beispiel aus einer Aluminiumlegierung mittels eines additiven Fertigungsverfahrens hergestellt ist. Bauteil bildet somit ein Hybridbauteil. Mittels des additiven Fertigungsverfahrens kann der zweite Körperabschnitt zum Aufweisen einer derart hohen thermischen Stabilität und mechanischen Festigkeit, insbesondere bei hohen homologen Temperaturen, legiert werden, wie es auf herkömmliche Weise, zum Beispiel mittels Gießen oder Schmieden, bei einem Bauteil, insbesondere einem Kolben aus einer Aluminiumlegierung oder einer Eisenbasislegierung oder einer Kupferbasislegierung nicht oder kaum möglich ist. Die hohe thermische Stabilität und mechanische Festigkeit sind beispielsweise bei der Verwendung der Aluminiumlegierung wichtig, da Aluminium an sich eine geringe thermische Stabilität und mechanische Festigkeit aufweist, verglichen beispielsweise mit Stahl. Im Gegensatz zum bekannten Stand der Technik aus der US 9,765,727 B2 wird insbesondere nicht auf eine höhere Wärmeleitfähigkeit des zweiten Körperbereichs abgestellt, da Aluminium an sich bereits eine hohe Wärmeleitfähigkeit aufweist, verglichen beispielsweise mit Stahl.

Zweckmäßig können der erste Körperbereich und der zweite Körperbereich mittels unterschiedlicher Fertigungsverfahren hergestellt sein. Insbesondere kann nur der zweite Körperbereich mittels eines additiven Fertigungsverfahrens hergestellt sein. Beispielsweise kann der erste Körperbereich mittels eines konventionellen bzw. herkömmlichen Fertigungsverfahrens hergestellt sein.

Es ist möglich, dass der erste Körperbereich mehrere miteinander verbundene Abschnitte aufweist (verbunden z. B. mittels Reibschweißen, Induktionsschweißen, Laserschweißen, Hybridschweißen), die mittels eines konventionellen bzw. herkömmlichen Fertigungsverfahrens hergestellt sein können. Es ist auch möglich, dass der erste Körperbereich mit weiteren Körperbereichen verbunden ist (verbunden z. B. mittels Reibschweißen, Induktionsschweißen, Laserschweißen, Hybridschweißen), die mittels eines konventionellen bzw. herkömmlichen Fertigungsverfahrens hergestellt sein können. Beispielsweise können die Abschnitte oder weiteren Körperbereiche ebenfalls mit dem zweiten Körperbereich verbunden sein. Insbesondere können die Abschnitte oder weiteren Körperbereiche ebenfalls miteinander und/oder mit dem ersten Körperbereich vor, während oder nach der Ausbildung des zweiten Körperbereichs verbunden werden.

Beispielsweise kann das additive Fertigungsverfahren Lasersintern, Laserschmelzen, Elektronenstrahlsintern und/oder Elektronenstrahlschmelzen aufweisen.

In einer weiteren Ausführungsform werden ein metallisches Pulver oder mehrere unterschiedliche metallische Pulver in dem additiven Fertigungsverfahren zum Bilden des zweiten Körperbereichs aufgeschmolzen.

In einer Ausführungsvariante weist der zweite Körperbereich einen gradierten Legierungsgehalt auf und/oder ist inhomogen legiert (z. B. ein sich entlang einer Gradierungsachse verändernden Gehalt an Legierungselementen). Alternativ oder zusätzlich verändert (z. B. erhöht oder verringert) sich im zweiten Körperbereich mit zunehmenden Abstand zum ersten Körperbereich (z. B. Abstand zu einer Kontaktfläche des ersten Körperbereichs in Kontakt mit dem zweiten Körperbereich) und/oder mit abnehmenden Abstand zu einer (insbesondere thermisch oder mechanisch hoch beanspruchten) Bauteiloberfläche des zweiten Körperbereichs (bzw. des Bauteils) ein Legierungsgehalt eines Legierungselements oder mehrerer Legierungselemente (z. B. graduell, allmählich, sukzessive, stufenweise).

Damit können innerhalb des zweiten Körperbereichs unterschiedliche Abschnitte mit zumindest teilweise unterschiedlichen Eigenschaften geschaffen werden. Insbesondere können dadurch die Eigenschaften verbessert und gleichzeitig Kosten für teure Legierungselemente reduziert werden. Zum Vorsehen der Gradierung bzw. inhomogenen Legierung können unterschiedliche Ausgangsstoffe, zum Beispiel unterschiedliche metallische Pulver, mittels des additiven Fertigungsverfahrens, beispielsweise nacheinander, aufgeschmolzen werden.

In einem Ausführungsbeispiel weist das Verfahren ferner ein Aufrauen einer mit dem zweiten Körperbereich zu verbindenden Kontaktfläche des ersten Körperbereichs, insbesondere mittels Laseraufrauung oder Elektronenstrahlaufrauung, auf. Alternativ oder zusätzlich weist das Verfahren ein Aufrauen einer mit dem ersten Körperbereich zu verbindenden Kontaktfläche des zweiten Körperbereichs, insbesondere mittels Laseraufrauung oder Elektronenstrahlaufrauung, auf. Die Aufrauhung kann eine Anbindung und eine Haltbarkeit der Verbindung zwischen dem ersten Körperbereich und dem zweiten Körperbereich verbessern.

Beispielsweise kann mittels der Aufrauung eine Oberflächenrauheit in einem mm-Bereich oder einem µm-Bereich vorgesehen werden.

In einer Weiterbildung des Verfahrens werden das Aufrauen der Kontaktfläche und das Ausbilden des zweiten Körperbereichs in der gleichen Fertigungsanlage (z. B. Elektronenstrahl- oder Laserstrahlfertigungsanlage) durchgeführt. Dadurch muss die Anlage nicht gewechselt werden. Dies kann Kosten und Zeit sowie eine weitere separate Fertigungsanlage einsparen.

In einem besonders bevorzugten Ausführungsbeispiel weist der zweite Körperbereich eine höhere thermische Stabilität und/oder eine höhere mechanische Festigkeit und/oder eine höhere Verschleißbeständigkeit bei tribologischer Beanspruchung als der erste Körperbereich durch Bilden einer Vielzahl von, insbesondere fein, verteilten, insbesondere hochwarmfesten und/oder verschleißreduzierenden, Phasen (Ausscheidungen) im zweiten Körperbereich durch das additive Fertigungsverfahren auf. Alternativ oder zusätzlich weist der zweite Körperbereich eine höhere thermische Stabilität und/oder eine höhere mechanische Festigkeit, insbesondere bei homologen Temperaturen größer oder gleich 0,5 (d. h. hohen homologen Temperaturen), und/oder eine höhere Verschleißbeständigkeit bei tribologischer Beanspruchung als der erste Körperbereich durch einen höheren Gehalt an Legierungselementen als der erste Körperbereich auf. Durch den höheren Gehalt an Legierungselementen können mehr, insbesondere verteilte und/oder hochwarmfeste und/oder verschleißreduzierende Phasen bzw. Ausscheidungen, durch das additive Fertigungsverfahren hergestellt werden als beim ersten Körperbereich.

Zweckmäßig kann unter einer hohen thermischen Stabilität verstanden werden, dass sich die vorhandenen Ausscheidungen erst bei höheren Temperaturen, insbesondere hohen homologen Temperaturen größer als 0,5, auflösen oder einformen.

Insbesondere kann unter einer homologen Temperatur ein Verhältnis der Temperatur T eines Stoffes zu dessen Schmelztemperatur Tₛ verstanden werden.

Zweckmäßig können Ausscheidungen, die bei homologen Temperaturen über 0,5 Tₛ oder insbesondere über 0,7 Tₛ des Basiswerkstoffs thermisch stabil sind, als hochwarmfest angesehen werden. Ausscheidungen mit geringer thermischer Stabilität in Aluminiumlegierungen können beispielsweise Mg₂Si-Ausscheidungen und Al₂Cu-Ausscheidungen sein.

Insbesondere kann sich eine, vorzugsweise feine, Verteilung und eine Ausbildung der hochwarmfesten und/oder verschleißreduzierenden Phasen durch eine hohe Erstarrungsgeschwindigkeit bei der additiven Fertigung, z. B. automatisch, ergeben.

Beispielsweise kann eine, insbesondere feine, Verteilung der hochwarmfesten und/oder verschleißreduzierenden Phasen an metallographischen Querschliffen im Lichtmikroskop oder insbesondere im Rasterelektronen- und Transmissionselektronenmikroskop sowie in tomographischen Atomsonden (auch als dreidimensionale Atomsonden bezeichnet) überprüft werden.

In einem weiteren Ausführungsbeispiel weist der zweite Körperbereich eine, insbesondere thermisch und/oder mechanisch beanspruchte (zum Beispiel erzeugt durch Verbrennung, Reibung usw.), Bauteiloberfläche des Bauteils auf. Damit kann die hohe thermische Stabilität, die hohe mechanische Festigkeit und/oder die hohe Verschleißbeständigkeit bei tribologischer Beanspruchung des zweiten Körperbereichs auf vorteilhafte Weise dazu genutzt werden, der hohen thermischen und/oder mechanischen Beanspruchung an der Bauteiloberfläche entgegenzuwirken.

Bei hohen Legierungsgehalten kann sich eine fein strukturierte, skelettartige Ausscheidungsstruktur (z. B. Gussphasenstruktur aus intermetallischen Phasen) mit hochwarmfesten intermetallischen Phasen im zweiten Körperbereich ausbilden. Die Ausscheidungsstruktur ist deutlich feiner strukturiert als beispielsweise in gegossenen Aluminiumkolben. D. h., die Größe der Ausscheidungsteilchen ist geringer als 2 µm, bevorzugt geringer als 1 µm und insbesondere bevorzugt geringer als 500 nm. Folglich sind die Spannungen an Phasengrenzen reduziert, und die Trennfestigkeit der Ausscheidungsphasen wird erst bei deutlich höheren mechanischen oder thermomechanischen Beanspruchungen erreicht als bei konventionell durch Gießen oder Schmieden hergestellten Bauteilen. Zugleich findet über den dreidimensional vernetzten Aufbau dieser feinen Gussphasen ein Lasttransfer in das Ausscheidungsskelett statt, und die mechanischen Eigenschaften werden insbesondere bei hohen homologen Temperaturen verbessert. Auch in der Aluminium-, Eisen- oder Kupfermatrix können durch die erhöhten Abkühlgeschwindigkeiten und die damit verbundene erhöhte Matrixübersättigung an Fremdelementen größere Mengen an fein verteilten sekundären Ausscheidungen gebildet werden. Diese weisen Größen im Bereich von typischerweise 1 nm bis 500 nm auf und erhöhen die mechanischen Festigkeiten zusätzlich.

In einem Ausführungsbeispiel ist der erste Körperbereich aus Stahl oder einer Aluminiumlegierung gebildet. Dadurch kann der erste Körperbereich und somit das Bauteil zweckmäßig kostengünstig hergestellt werden.

In einer bevorzugten Ausführungsvariante ist der erste Körperbereich ein Kolbenrohling (z. B. aufweisend Kolbenhemd, Bolzenbohrungen, Kolbenunterseite, Kolbenkühlkanal, Kolbenkühlgalerie (insbesondere vollständig)) eines Kolbens einer Brennkraftmaschine. Alternativ oder zusätzlich weist der zweite Körperbereich im Wesentlichen zumindest einen Abschnitt eines Kolbenbodens (z. B. Verbrennungsfläche) eines Kolbens, insbesondere einen Muldenrand des Kolbenbodens, auf. Folglich kann der thermisch hoch beanspruchte Kolbenboden des Kolbens, der einer Verbrennungskammer des Zylinders zugewandt ist, durch den zweiten Körperbereich mit dessen hoher thermischer Stabilität gebildet sein. Andere Abschnitte des Kolbens, die weniger thermisch beansprucht sind, können hingegen von dem ersten Körperbereich auf herkömmliche Weise kostengünstig gebildet sein.

In einer weiteren Ausführungsvariante ist der zweite Körperbereich als eine Beschichtung (zum Beispiel aufweisend mehrere Lagen additiv aufgebrachten Materials) ausgebildet. Alternativ oder zusätzlich weist der zweite Körperbereich eine Materialstärke auf, die kleiner als eine Materialstärke des ersten Körperbereichs und/oder kleiner als 20 mm, 15 mm oder 10 mm und/oder größer als 0,3 mm, 1 mm, 2 mm oder 3 mm ist. Durch die vergleichsweise geringe Größe des zweiten Körperbereichs kann der Aufwand und die Kosten zur Ausbildung des zweiten Körperbereichs verringert werden.

In einer Ausführungsform wird der zweite Körperbereich direkt auf den ersten Körperbereich aufgebaut. Alternativ oder zusätzlich wird der zweite Körperbereich nach dessen Herstellung mit dem ersten Körperbereich verbunden, insbesondere durch Reibschweißen, Induktionsschweißen, Laserschweißen, ein Hybridschweißverfahren oder dergleichen. Damit besteht sowohl die Möglichkeit, den zweiten Körperbereich integral auf den ersten Körperbereich aufzubauen oder aber den zweiten Körperbereich zunächst separat herzustellen, um diesen dann mit dem ersten Körperbereich zu verbinden.

In einer weiteren Ausführungsform erfolgt das additiven Fertigungsverfahren im Pulverbettverfahren, wobei die Aufschmelzung eines metallischen Pulvers oder mehrerer unterschiedlicher metallischer Pulver insbesondere mittels Elektronenstrahl oder Laserstrahl erfolgt.

Zweckmäßig kann durch den unterschiedlichen Gehalt eines oder mehrerer Legierungselementen eine Anzahl von, insbesondere hochwarmfesten und/oder verschleißreduzierenden, Phasen (Ausscheidungen), die beim additiven Fertigungsverfahren hergestellt werden, verändert werden. Insbesondere können so ein oder mehrere Abschnitte geschaffen werden, die mehr hochwarmfeste Phasen und/oder verschleißreduzierende Phasen aufweisen, als andere Abschnitte des zweiten Körperbereichs.

Beispielsweise kann insbesondere die thermische Stabilität und/oder die mechanische Festigkeit und/oder die Verschleißbeständigkeit an einer thermisch und/oder mechanisch hoch belasteten Oberfläche des zweiten Körperbereichs besonders groß vorgesehen werden. Es ist auch möglich, dass die thermische Stabilität an einer Kontaktfläche des zweiten Körperbereichs zum ersten Körperbereich kleiner als an der thermisch hoch belasteten Oberfläche vorgesehen ist.

In einer Weiterbildung verringert sich im zweiten Körperbereich mit zunehmenden Abstand zum ersten Körperbereich (z. B. Abstand zu einer Kontaktfläche des ersten Körperbereichs in Kontakt mit dem zweiten Körperbereich) und/oder mit abnehmenden Abstand zur Bauteiloberfläche des zweiten Körperbereichs ein Legierungsgehalt von Mg, Si und/oder Cu (z. B. graduell, allmählich, sukzessive, stufenweise, schichtweise, lagenweise).

Alternativ oder zusätzlich erhöht sich im zweiten Körperbereich mit zunehmenden Abstand zum ersten Körperbereich (z. B. Abstand zu einer Kontaktfläche des ersten Körperbereichs in Kontakt mit dem zweiten Körperbereich) und/oder mit abnehmendem Abstand zur Bauteiloberfläche des zweiten Körperbereichs ein Legierungsgehalt von Ni, Fe, Mn, Zr, V, Ti, Nb, Sc, Mo, Co, Cr, Hf, Ta, W, Re, Al, P und/oder Si (z. B. graduell, allmählich, sukzessive, stufenweise, schichtweise, lagenweise).

Zweckmäßig kann sich ein Legierungsgehalt eines oder mehrerer Legierungselemente so erhöhen bzw. verringern, dass sich eine thermische Stabilität des zweiten Körperbereichs mit zunehmenden Abstand zum ersten Körperbereich und/oder mit abnehmendem Abstand zur Bauteiloberfläche des zweiten Körperbereichs vergrößert (z. B. graduell, allmählich, sukzessive, stufenweise, schichtweise, lagenweise).

In einem Ausführungsbeispiel weist das Verfahren ferner ein (insbesondere abschnittsweise und/oder zeitweise gezieltes) Erwärmen und/oder ein (insbesondere abschnittsweise und/oder zeitweise gezieltes) Kühlen des Bauteils vor, während und/oder nach der Ausbildung des zweiten Körperbereichs auf. Damit können die Bauteileigenschaften zweckmäßig optimiert werden. Beispielsweise können die Bauteileigenschaften durch eine Vorwärmung oder eine gezielte Kühlung während der additiven Fertigung gesteuert und verbessert werden.

Beispielsweise können durch die erhöhten Abkühlraten bei einer Kühlung unter anderem die Struktur noch stärker gefeint werden. Weiterhin kann eine erhöhte Matrixübersättigung und somit eine verstärkte Mischkristallverfestigung und Ausscheidungshärtung möglich sein. Durch eine gezielte Erwärmung können unter anderem Spannungen im Bauteil reduziert werden, auch eine Reduktion des Verzugs ist möglich.

In einem weiteren Ausführungsbeispiel weist das Verfahren ein Wärmebehandeln des Bauteils nach der Ausbildung des zweiten Körperbereichs auf. Durch die nachgeschaltete Wärmebehandlung kann eine Eigenschaftsverbesserung des Bauteils erzielt werden.

Die vorliegende Offenbarung ist auch auf ein Bauteil, insbesondere Fahrzeugbauteil und/oder Motorbauteil (z. B. Teil eines Kraftfahrzeugmotors, stationären Motors, Gasmotors, Dieselmotors, Benzinmotors, einer Turbine usw.), vorzugsweise einen Kolben einer Brennkraftmaschine gerichtet, das durch ein Verfahren wie hierin offenbart hergestellt ist.

Es ist auch möglich, das Verfahren zur Herstellung anderer, insbesondere thermisch und/oder mechanisch hoch beanspruchter, Fahrzeugbauteile und/oder Motorbauteile und/oder anderer Bauteile, zu verwenden.

Die vorliegende Offenbarung ist auch auf ein Fahrzeug (z. B. Kraftfahrzeug), insbesondere ein Nutzfahrzeug (zum Beispiel Lastkraftwagen oder Omnibus), mit einem Fahrzeugbauteil, das durch ein Verfahren wie hierin offenbart hergestellt ist, gerichtet.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: einen Abschnitt eines beispielhaften Kolbenoberteils eines Kolben einer Hubkolben-Brennkraftmaschine gemäß der vorliegenden Offenbarung;
- Figur 2: einen Abschnitt eines beispielhaften ersten und zweiten Körperbereichs eines Fahrzeugbauteils gemäß der vorliegenden Offenbarung; und
- Figur 3: einen Abschnitt eines weiteren beispielhaften ersten und zweiten Körperbereichs eines Fahrzeugbauteils gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

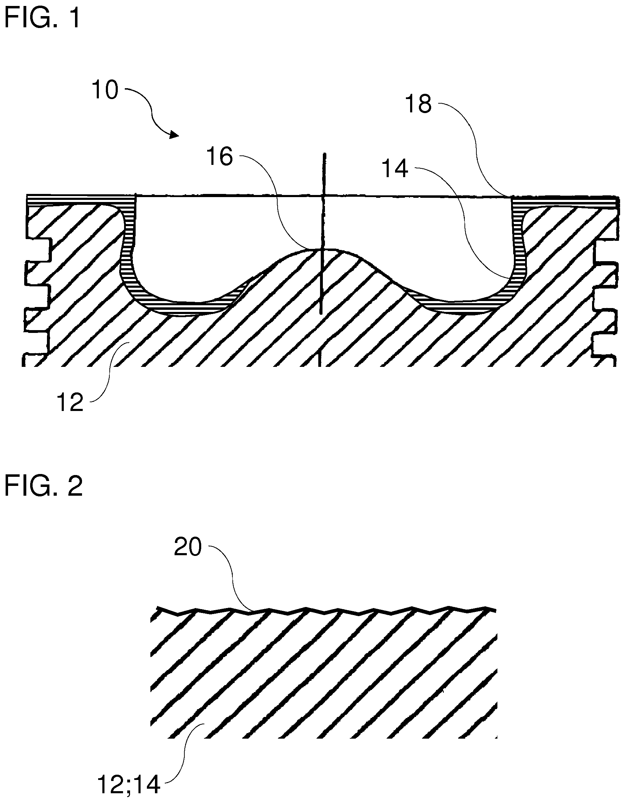

Die Figur 1 zeigt ein Kolbenoberteil eines Kolbens 10 einer Brennkraftmaschine, zum Beispiel eines Kraftfahrzeugs. Hierin ist der Kolben 10 als ein besonders bevorzugtes Ausführungsbeispiel für das erfindungsgemäße Herstellungsverfahren beschrieben. Es ist allerdings auch möglich, andere Bauteile, wie zum Beispiel andere Motorbauteile einer Brennkraftmaschine oder Bauteile einer Turbine, gemäß dem erfindungsgemäßen Verfahren herzustellen. Insbesondere eignen sich solche Bauteile für das erfindungsgemäße Verfahren, die eine Bauteiloberfläche aufweisen, die im Betrieb thermisch und/oder mechanisch (stark) beansprucht ist. Das Fahrzeugbauteil kann ein Bauteil eines Kraftfahrzeugs, insbesondere eines Nutzfahrzeugs, zum Beispiel eines Omnibusses oder eines Lastkraftwagens, sein.

Der Kolben 10 kann als ein sogenannter Monoblock integral-einstückig hergestellt sein. Alternativ kann der Kolben 10 mehrteilig aufgebaut sein, wobei die mehreren Teile beispielsweise mittels lösbarer oder nicht lösbarer Verbindungsmittel miteinander verbunden sind.

Der Kolben 10 ist aus einem ersten Körperbereich 12 und einem zweiten Körperbereich 14 gebildet. Der erste Körperbereich 12 ist nur abschnittsweise dargestellt. Der erste Körperbereich 12 ist durch einen Kolbenrohling gebildet. Der zweite Körperbereich 14 umfasst zumindest einen Abschnitt eines Kolbenbodens 16 des Kolbens 10. In der dargestellten Ausführungsform ist der zweite Körperbereich 14 im Wesentlichen im Bereich eines Muldenrands 18 des Kolbenbodens 16 vorgesehen. Die zweite Körperbereich 14 erstreckt sich ringförmig. Es ist auch möglich, dass sich der Körperbereich 14 beispielsweise flächig erstreckt. Der zweite Körperbereich 14 ist beispielsweise symmetrisch um eine Mittellängsachse des Kolbens 10 angeordnet. Insbesondere der Muldenrand 18 ist während des Betriebs der Brennkraftmaschine hohen thermischen Belastungen ausgesetzt. Aufgrund von dessen Herstellungsverfahren ist der Kolben 10 in der Lage, den hohen thermischen Belastungen insbesondere im Bereich des Kolbenbodens 16 während des Betriebs zu widerstehen. Der Kolben 10 ist dennoch praktisch einsetzbar, da der Aufwand und die Kosten für die Herstellung des Kolbens 10 in wirtschaftlich vertretbaren Maßen gehalten werden.

Der erste Körperbereich 12 bildet einen Hauptkörperbereich, während der zweite Körperbereich 14 lediglich einen Teilkörperbereich, insbesondere einen Randkörperbereich, ausbildet. Der erste Körperbereich 12 ist mit dem zweiten Körperbereich 14 unmittelbar verbunden. Insbesondere geht der erste Körperbereich 12 in den zweiten Körperbereich 14 über. Der zweite Körperbereich 14 weist eine geringere Materialstärke als der erste Körperbereich 12 auf. Insbesondere ist eine Materialstärke des zweiten Körperbereichs 14 kleiner als 20 mm. Beispielsweise kann der zweite Körperbereich 14 als eine Beschichtung des ersten Körperbereichs 12 ausgebildet sein.

Das Verfahren zur Herstellung des Kolbens 10 ist als ein Hybridverfahren konzipiert. Der erste Körperbereich 12 und der zweite Körperbereich 14 sind durch unterschiedliche Fertigungsverfahren hergestellt.

Der erste Körperbereich 12 ist mittels eines herkömmlichen Fertigungsverfahrens, zum Beispiel Gießen oder Schmieden, hergestellt. Der erste Körperbereich 12 ist aus einen Basiswerkstoff, insbesondere aus Stahl oder einer Aluminiumlegierung, hergestellt. Somit kann der erste Körperbereich 12 vergleichsweise kostengünstig ausgebildet werden.

Der zweite Körperbereich 14 ist mittels eines additiven Fertigungsverfahrens, insbesondere schichtweise, hergestellt. Der zweite Körperbereich 14 besteht aus einer Aluminiumlegierung. Es ist auch möglich, dass der zweite Körperbereich aus einer Eisenbasislegierung (z. B. Stahl, Gusseisenlegierung) oder einer Kupferbasislegierung besteht. Der zweite Körperbereich 14 ist derart legiert, dass der zweite Körperbereich 14 eine größere thermische Stabilität bzw. Hitzebeständigkeit als der erste Körperbereich 12 aufweist. Der zweite Körperbereich 14 kann einen erhöhten Gehalt an Legierungselementen aufweisen. Insbesondere ermöglicht das additive Fertigungsverfahren die Bildung vieler, insbesondere sehr fein, verteilter hochwarmfester Phasen bzw. Ausscheidungen, die zu einer großen thermischen Stabilität des zweiten Körperbereichs 14 führen. Insbesondere kann mittels des additiven Fertigungsverfahrens der zweite Körperbereich 14 durch Bilden der vielen hochwarmfesten Phasen eine derartige thermische Stabilität und/oder mechanische Festigkeit erreichen, wie sie mittels eines herkömmlichen Fertigungsverfahrens, das zum Herstellen des ersten Körperbereichs 12 verwendet wird, nicht möglich wäre.

Der erste Körperbereich 12 wird mittels des herkömmlichen Herstellungsverfahrens separat von den zweiten Körperbereich 14 hergestellt. Der zweite Körperbereich 14 kann separat von dem ersten Körperbereich 12 hergestellt werden. Nach dessen Herstellung kann der zweite Körperbereich 14 dann mit dem ersten Körperbereich 12 fest verbunden werden, insbesondere durch Reibschweißen oder Laserschweißen. Es ist allerdings auch möglich, dass der zweite Körperbereich 14 direkt auf den ersten Körperbereich 12 aufgebaut wird. Der erste Körperbereich 12 kann vor, während oder nach dem Aufwachsen / Aufbauen des zweiten Körperbereichs 14 mit anderen bspw. konventionell gefertigten Bauteilbereichen verbunden werden. Die Verbindung kann beispielsweise durch Reibschweißen, Induktionsschweißen, Laserschweißen oder ein Hybridschweißverfahren hergestellt werden.

Zum Herstellen des zweiten Körperbereichs 14 wird ein metallisches Pulver oder mehrere unterschiedliche metallische Pulver beispielsweise in einem Pulverbettverfahren aufgeschmolzen. Beispielsweise kann der als Kolbenrohling ausgebildete erste Körperbereich 12 in einer Anlage zur additiven Fertigung positioniert werden. Der zweite Körperbereich 14 wird dann direkt auf den ersten Körperbereich 12 durch Aufschmelzen des metallischen Pulvers oder der metallischen Pulver aufgebaut. Beispielsweise kann das Aufschmelzen des metallischen Pulvers mittels Elektronenstrahl oder Laserstrahl erfolgen. Beispielsweise kann das additive Herstellerverfahren Lasersintern bzw. Laserschmelzen umfassen.

Insbesondere die Oberfläche des zweiten Körperbereichs 14 ist hohen thermischen und/oder mechanischen Belastungen ausgesetzt. Die thermischen Belastungen können in Richtung zum Kolbeninneren geringer werden. Daher kann beispielsweise vorgesehen sein, dass der zweite Körperbereich 14 eine Gradierung an Legierungselementen aufweist. Mit anderen Worten gesagt, der zweite Körperbereich 14 kann mit sich veränderndem Abstand zu seiner Oberfläche einen sich verändernden (zum Beispiel zunehmenden oder abnehmenden) Gehalt an Legierungselementen aufweisen. Durch die Gradierung kann beispielsweise durch einen vergleichsweise hohen bzw. niedrigen Gehalt an bestimmten Legierungselementen im Bereich der Oberfläche eine besonders hohe thermische Stabilität sowie eine hohe mechanische Festigkeit bei niedrigen und hohen homologen Temperaturen in diesem Bereich erreicht werden.

Beispielsweise kann sich im zweiten Körperbereich 14 mit zunehmenden Abstand zum ersten Körperbereich 12 und/oder mit abnehmenden Abstand zur Oberfläche des zweiten Körperbereichs 14 ein Legierungsgehalt von Mg, Si und/oder Cu verringern. Es ist beispielsweise auch möglich, dass sich im zweiten Körperbereich 14 mit zunehmenden Abstand zum ersten Körperbereich 12 und/oder mit abnehmendem Abstand zur Oberfläche des zweiten Körperbereichs 14 ein Legierungsgehalt von Ni, Fe, Mn, Zr, V, Ti, Nb, Sc, Mo, Co, Cr, Hf, Ta, W, Re, Al, P und/oder Si erhöht.

In Figur 2 ist eine Kontaktfläche 20 des ersten Körperbereichs 12 bzw. des zweiten Körperbereichs 14 dargestellt. An der Kontaktfläche 20 berühren sich der erste Körperbereich 12 und der zweite Körperbereich 14, wenn sie miteinander verbunden sind bzw. verbunden werden. Insbesondere ist in Figur 2 gezeigt, dass die Kontaktfläche 20 des ersten Körperbereichs 12 und/oder des zweiten Körperbereichs 14 aufgeraut werden kann, um eine feste Verbindung zwischen dem ersten Körperbereich 12 und dem zweiten Körperbereich 14 zu ermöglichen und/oder die Haftfestigkeit der Verbindung zu erhöhen. Zweckmäßig wird die Kontaktfläche 20 des ersten Körperbereichs 12 aufgeraut, wenn der zweite Körperbereich 14 direkt auf den ersten Körperbereich 12 aufgebaut wird. In diesem Fall wird die Kontaktfläche 20 aufgeraut, bevor der zweite Körperbereich 14 aufgebaut wird. In einem anderen Fall, in dem der zweite Körperbereich 14 zunächst separat hergestellt wird, um anschließend mit dem ersten Körperbereich 12 verbunden zu werden, kann allerdings auch zusätzlich oder alternativ die Kontaktfläche 20 des zweiten Körperbereichs 14 aufgeraut werden.

Vorzugsweise wird die Kontaktfläche 20 mittels Laserstrahl oder Elektronenstrahl aufgeraut. Es ist möglich, dass die Aufrauhung der Kontaktfläche 20 in der gleichen Fertigungsanlage stattfindet wie die Herstellung des zweiten Körperbereichs 14.

Es ist auch möglich, die Eigenschaften des Kolbens 10, insbesondere des zweiten Körperbereichs 14, durch gezieltes Kühlen und/oder Erwärmen vor, während oder nach der Herstellung zu verbessern. Zweckmäßig kann auch eine Wärmebehandlung nach der Herstellung des Kolbens 10 vorgenommen werden.

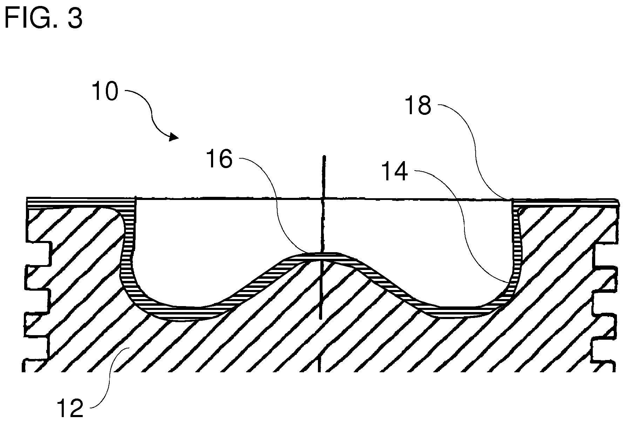

Figur 3 zeigt ein weiteres Ausführungsbeispiel. Hier ist der zweite Körperbereich 14 flächig im Bereich des Muldenrands 18 und des Kolbenbodens 16 (inklusive der Mulde sowie dem zentralen Dom) des Kolbens 10 vorgesehen. Mit anderen Worten gesagt, der zweite Körperbereich 14 weist eine der Verbrennungskammer zugewandte Verbrennungsfläche des Kolbens 10 vollständig auf.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des ersten Körperbereichs und/oder des zweiten Körperbereichs des unabhängigen Anspruchs 1 offenbart.

### Bezugszeichenliste

- 10: Kolben
- 12: Erster Körperbereich
- 14: Zweiter Körperbereich
- 16: Kolbenboden
- 18: Muldenrand
- 20: Kontaktfläche

## Patentansprüche

1. Verfahren zum Herstellen eines Bauteils, insbesondere eines Fahrzeugbauteils und/oder eines Motorbauteils, vorzugsweise eines Kolbens (10) einer Brennkraftmaschine, aufweisend:
Ausbilden eines ersten Körperbereichs (12), insbesondere mittels Gießen und/oder Schmieden; und
Ausbilden eines zweiten Körperbereichs (14), der mit dem ersten Körperbereich (12) verbunden ist, aus einer Aluminiumlegierung oder einer Eisenbasislegierung oder einer Kupferbasislegierung mittels eines additiven Fertigungsverfahrens, wobei der zweite Körperbereich (14) so legiert ist, dass er eine höhere thermische Stabilität, eine höhere mechanische Festigkeit und/oder eine höhere Verschleißbeständigkeit bei tribologischer Beanspruchung als der erste Körperbereich (12) aufweist.

2. Verfahren nach Anspruch 1, wobei:
ein metallisches Pulver oder mehrere unterschiedliche metallische Pulver in dem additiven Fertigungsverfahren zum Bilden des zweiten Körperbereichs (14) aufgeschmolzen werden.

3. Verfahren nach Anspruch 1 oder Anspruch 2, wobei:
der zweite Körperbereich (14) einen gradierten Legierungsgehalt aufweist und/oder inhomogen legiert ist; und/oder
sich im zweiten Körperbereich (14) mit zunehmenden Abstand zum ersten Körperbereich (12) und/oder mit abnehmenden Abstand zu einer Bauteiloberfläche des zweiten Körperbereichs (14) ein Legierungsgehalt eines Legierungselements oder mehrerer Legierungselemente verändert.

4. Verfahren nach einem der vorherigen Ansprüche, ferner aufweisend:
Aufrauen einer mit dem zweiten Körperbereich (14) zu verbindenden Kontaktfläche (20) des ersten Körperbereichs (12), insbesondere mittels Laseraufrauung oder Elektronenstrahlaufrauung; und/oder
Aufrauen einer mit dem ersten Körperbereich (12) zu verbindenden Kontaktfläche (20) des zweiten Körperbereichs (14), insbesondere mittels Laseraufrauung oder Elektronenstrahlaufrauung.

5. Verfahren nach Anspruch 4, wobei:
das Aufrauen der Kontaktfläche und das Ausbilden des zweiten Körperbereichs (14) in dergleichen Fertigungsanlage durchgeführt werden.

6. Verfahren nach einem der vorherigen Ansprüche, wobei:
der zweite Körperbereich (14) eine höhere thermische Stabilität und/oder eine höhere mechanische Festigkeit und/oder eine höhere Verschleißbeständigkeit bei tribologischer Beanspruchung als der erste Körperbereich (12) durch Bilden einer Vielzahl von verteilten, insbesondere hochwarmfesten und/oder verschleißreduzierenden, Phasen im zweiten Körperbereich (14) durch das additive Fertigungsverfahren aufweist; und/oder
der zweite Körperbereich (14) eine höhere thermische Stabilität und/oder eine höhere mechanische Festigkeit, insbesondere bei homologen Temperaturen größer oder gleich 0,5, und/oder eine höhere Verschleißbeständigkeit bei tribologischer Beanspruchung als der erste Körperbereich (12) durch einen höheren Gehalt an Legierungselementen als der erste Körperbereich (12) aufweist.

7. Verfahren nach einem der vorherigen Ansprüche, wobei:
der zweite Körperbereich (14) eine, insbesondere thermisch und/oder mechanisch beanspruchte, Bauteiloberfläche des Bauteils aufweist.

8. Verfahren nach einem der vorherigen Ansprüche, wobei:
der erste Körperbereich (12) aus Stahl oder einer Aluminiumlegierung gebildet ist.

9. Verfahren nach einem der vorherigen Ansprüche, wobei:
der erste Körperbereich (12) ein Kolbenrohling eines Kolbens (10) einer Brennkraftmaschine ist; und/oder
der zweite Körperbereich (14) zumindest einen Abschnitt eines Kolbenbodens (16) eines Kolbens (10), insbesondere einen Muldenrand (18) des Kolbenbodens (16), aufweist.

10. Verfahren nach einem der vorherigen Ansprüche, wobei:
der zweite Körperbereich (14) als eine Beschichtung ausgebildet ist; und/oder
der zweite Körperbereich (14) eine Materialstärke aufweist, die kleiner als eine Materialstärke des ersten Körperbereichs (12) und/oder kleiner als 20 mm, 15 mm oder 10 mm ist und/oder größer als 0,3 mm, 1 mm, 2 mm oder 3 mm ist.

11. Verfahren nach einem der vorherigen Ansprüche, wobei:
der zweite Körperbereich (14) direkt auf den ersten Körperbereich (12) aufgebaut wird; oder
der zweite Körperbereich (14) nach dessen Herstellung mit dem ersten Körperbereich (12) verbunden wird, insbesondere durch Reibschweißen, Induktionsschweißen, Laserschweißen oder ein Hybridschweißverfahren.

12. Verfahren nach einem der vorherigen Ansprüche, wobei:
das additiven Fertigungsverfahren im Pulverbettverfahren erfolgt, wobei die Aufschmelzung eines metallischen Pulvers oder mehrerer unterschiedlicher metallischer Pulver insbesondere mittels Elektronenstrahl oder Laserstrahl erfolgt.

13. Verfahren nach einem der vorherigen Ansprüche, wobei:
sich im zweiten Körperbereich (14) mit zunehmenden Abstand zum ersten Körperbereich (12) und/oder mit abnehmenden Abstand zur Bauteiloberfläche des zweiten Körperbereichs (14) ein Legierungsgehalt von Mg, Si und/oder Cu verringert; und/oder
sich im zweiten Körperbereich (14) mit zunehmenden Abstand zum ersten Körperbereich (12) und/oder mit abnehmendem Abstand zur Bauteiloberfläche des zweiten Körperbereichs (14) ein Legierungsgehalt von Ni, Fe, Mn, Zr, V, Ti, Nb, Sc, Mo, Co, Cr, Hf, Ta, W, Re, Al, P und/oder Si erhöht.

14. Verfahren nach einem der vorherigen Ansprüche, ferner aufweisend:
Erwärmen und/oder Kühlen des Fahrzeugbauteils vor, während und/oder nach der Ausbildung des zweiten Körperbereichs (14); und/oder
Wärmebehandeln des Fahrzeugbauteils nach der Ausbildung des zweiten Körperbereichs (14).

15. Bauteil, insbesondere Fahrzeugbauteil und/oder Motorbauteil, vorzugsweise Kolben einer Brennkraftmaschine, oder Fahrzeug, insbesondere Nutzfahrzeug, mit einem Fahrzeugbauteil, das durch ein Verfahren nach einem der vorherigen Ansprüche hergestellt ist.
